# EUROPÄISCHE PATENTSCHRIFT

(11) **EP 0 461 519 B1**
(45) Veröffentlichungstag und Bekanntmachung des Hinweises auf die Patenterteilung: **14.04.1999**
(21) Anmeldenummer: 91109079.3
(22) Anmeldetag: 04.06.1991
(51) Int. Cl.: H04Q 11/00

(54) **Optisches Schaltelement**
Optical switching element
Elément de commutation optique

(30) Priorität: 15.06.1990 DE 4019225
(43) Veröffentlichungstag der Anmeldung: 18.12.1991
(73) Patentinhaber: ALCATEL, 75008 Paris (FR)
(72) Erfinder: Böttle, Dietrich, W-7335 Salach (DE)
(74) Vertreter: Rausch, Gabriele, Dr.

(56) Entgegenhaltungen:
- TECHNICAL DIGEST, OPTICAL FIBER COMMUNICATION CONFERENCE, 22-26 JAN. 1990, BD.1 SEITE 31, SAN FRANCISCO US , XP146228 N. WHITEHEAD 'Photonic switching systems experiments in the RACE program'
- PROCEEDINGS, EUROPEAN CONFERENCE ON OPTICAL COMMUNICATIONS, 11-15 SEPT. 1988, TEIL 2 SEITEN 139-142, BRIGHTON GB , XP145096 M. FUJIWARA ET AL 'A Coherent Photonic Wavelength Division Switching System for Broadband Networks'
- PROCEEDINGS OF THE IEEE Bd. 78, Nr. 1, Januar 1990, NEW YORK US Seiten 121 - 132 , XP125847 G.R. HILL 'Wavelength Domain Optical Network Techniques'
- PROCEEDINGS, EUROPEAN CONFERENCE ON OPTICAL COMMUNICATIONS, 11-15 SEPT. 1988, TEIL 2 SEITEN 49-52, BRIGHTON GB , XP145064 M. NISHIO ET AL 'Eight channel Wavelength-Division Switching Experiment Using Wide-Tuning-Range DFB LD Filters'
- SUMMARIES OF PAPERS, TOPICAL MEETING ON PHOTONIC SWITCHING 18-20 M RZ 1987, SEITEN 21-23, INCLINE VILLAGE US S. SUZUKI ET AL 'Optical Broadband Communications Network Architecture Utilizing Wavelength-Division Switching Technologies'
- CONFERENCE RECORD, IEEE/IEICE GLOBAL TELECOMMUNICATIONS CONFERENCE 15-18 NOV. 1987, BD.2 SEITEN 1305-1309, TOKYO JP , XP12670 N. GOTO 'Wavelength- Multiplexed Optical Switching System Using Acousto-Optic Switches'

## Beschreibung

Die Erfindung betrifft ein optisches Schaltelement.

Bekannt sind elektrische Schaltelemente (Multiplexer, Demultiplexer, Vermittlungselemente), durch die mehrere Datenströme zusammengefaßt, aufgeteilt oder vermittelt werden.

In herkömmlicher, elektrischer Übermittlungstechnik erfolgt die Weitergabe digitaler Daten üblicherweise im Zeitmultiplex, also durch zeitliches Ineinanderschachteln von Daten verschiedener Verbindungen.

Hier sind sowohl Zeitmultiplexkänale zu nennen, also zusammengehörige Zeitschlitze in festem Abstand, als auch Verbindungen, bei denen Zellen in unregelmäßigen Abständen in einen Datenstrom eingefügt sind. Das erste ist die seit langem bekannte, wenn auch erst jetzt so genannte STM-Technik (STM = Synchronous Transfer Mode), das zweite ist die ATM-Technik (ATM = Asynchronous Transfer Mode).

Die Verknüpfung, insbesondere die Vermittlung solcher Zeitmultiplexdatenströme erfolgt bei herkömmlicher, elektrischer Übermittlungstechnik durch räumliche und zeitliche Umsetzungen.

Für die optische Signalübertragung sollen nun vergleichbare Schaltelemente geschaffen werden. Für die räumliche Umsetzung, d.h. die Umsetzung eines optischen Signals von einem optischen Signalweg zu einem anderen, gibt es bereits genügend auch für die Praxis brauchbare Lösungen. Die zeitliche Umsetzung, die zwangsläufig mit einer Zwischenspeicherung verbunden ist, ist prinzipiell auch gelöst. Für die praktische Anwendung, insbesondere für die Vermittlung optischer ATM-Signale, sind die Lösungen aber ungeeignet.

In dem Aufsatz "Wavelength-multiplexed optical switching system using acousto-optic switching", von N. Goto, Conference Record, IEEE/IEICE Global Telecommunications Conference, 15. bis 18. Nov. 1978, Tokyo, JP, Seiten 1305 bis 1309, ist bereits ein Wellenlängenmultiplex-Vermittlungssystem bekannt, welches eine wellenlängenselektive Koppelmatrix und Wellenlängenumsetzer enthält. Das Vermittlungssystem wird durch akustisch-optische Koppelelemente realisiert. Es können auch elektro-optische Bauelemente verwendet werden.

Wellenlängenumsetzer mit elektro-optischen Bauelementen werden in "Photonic switching systems experiments in the RACE program", von N. Whitehead, Technical Digest, Optical Fiber Communication Conference, 22. bis 26. Jan. 1990, BD1, Seite 31, San Francisco, US, beschrieben, wobei ein vier Wellenlängen aufweisendes Eingangssignal in ein Ausgangssignal gewandelt wird, in dem das von externen optischen Quellen kommende Licht mit den unterschiedlichen Wellenlängen moduliert wird.

Die Erfindung wird im folgenden am Beispiel von Vermittlungselementen beschrieben. Sie ist jedoch gleichermaßen auf Multiplexer und Demultiplexer anwendbar. Jedes Vermittlungselement kann sowohl als Kombination mehrerer Multiplexer als auch als Kombination mehrerer Demultiplexer angesehen werden. Räumlich verteilte Vermittlungssysteme, wie z.B. Ringsysteme, machen davon auch Gebrauch, indem durch Multiplexer einzelne Signale in einen aus einer Vielzahl von Signalen bestehenden Datenstrom eingefügt oder durch Demultiplexer aus einem solchen Datenstrom ausgeblendet werden. Dies kann bei einem Wellenlängenmultiplex-Datenstrom in prinzipiell der gleichen Weise erfolgen wie bei einem Zeitmultiplex-Datenstrom. Prinzipiell können auch die gleichen Strukturen verwendet werden, die auch bei Raum- und Zeitmultiplex Verwendung finden.

Im folgenden wird die Erfindung anhand zweier Ausführungsbeispiele unter Zuhilfenahme der beiliegenden Zeichnungen weiter erläutert.
- Fig. 1: zeigt ein 2x2-Vermittlungselement mit einer Koppelmatrix.
- Fig. 2: zeigt ein 2x2-Vermittlungselement mit einem zentralen Datenbus.

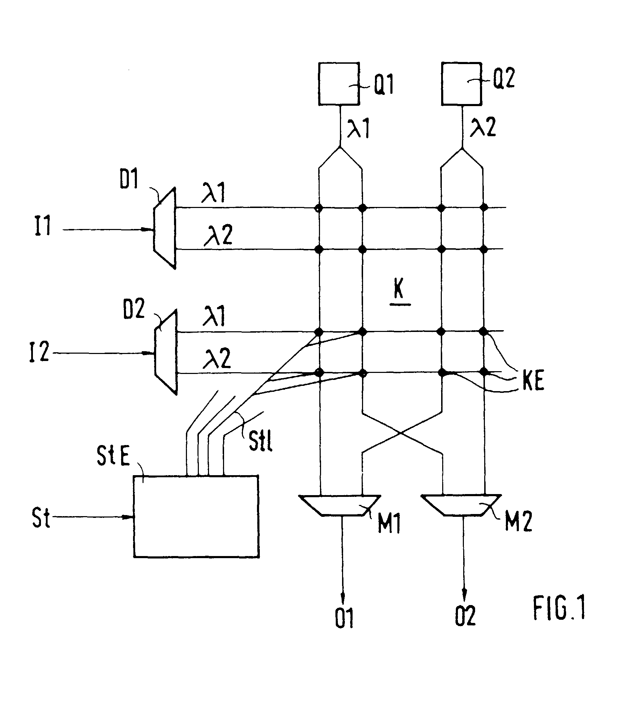

Das Vermittlungselement nach Fig. 1 weist zwei Eingänge I1 und I2, zwei Ausgänge O1 und O2, zwei Wellenlängen-Demultiplexer D1 und D2, zwei Wellenlängen-Multiplexer M1 und M2, zwei Konstantlicht-Quellen Q1 und Q2 und eine Koppelmatrix K mit Koppelelementen KE auf.

Das Vermittlungselement enthält weiter noch eine Steuereinheit StE mit Steuerleitungen Stl zum Ansteuern der Koppelelemente KE sowie eine äußere Steuerleitung St zum Empfang der dafür erforderlichen Steuersignale.

An jedem Ein- und Ausgang können im Wellenlängenmultiplex zwei Signale übertragen werden. Es sind die beiden Betriebs-Wellenlängen λ1 und λ2 vorgesehen. In den den Eingängen I1 und I2 nachgeschalteten Demultiplexern D1 und D2 erfolgt je eine Aufspaltung nach den beiden Wellenlängen. Die insgesamt vier getrennt vorliegenden Signale werden den optischen Zeilenleitungen der Koppelmatrix K zugeführt.

Die beiden Konstantlichtquellen Q1 und Q2 arbeiten mit den beiden Betriebs-Wellenlängen λ1 bzw. λ2. Jede Konstantlichtquelle speist zwei Spaltenleitungen der Koppelmatrix K.

Die Zeilen- und Spaltenleitungen kreuzen sich in den Koppelelementen KE. Jedes Koppelelement KE ist so ausgebildet, daß es in einem nicht aktivierten Zustand das von der zugehörigen Konstantlichtquelle kommende Licht unbeeinflußt hindurchläßt und in einem aktivierten Zustand dieses Licht mit dem Signal der zugehörigen Zeilenleitung moduliert. Die Umschaltung zwischen aktiviertem und nicht aktiviertem Zustand erfolgt durch die genannten Mittel zum Ansteuern der Koppelelemente.

Von jeder Konstantlichtquelle Q1 und Q2 führt eine Spaltenleitung zu jedem Wellenlängen-Multiplexer M1 und M2. Die Wellenlängen-Multiplexer M1 und M2 sind den Ausgängen O1 bzw. O2 vorgeschaltet und fassen jeweils die hierfür bestimmten, auf Licht verschiedener Betriebswellenlängen aufmodulierten Signale zu einem gemeinsamen Wellenlängenmultiplex-Signal zusammen.

Von jedem Eingang I1 und I2 führt somit zu jedem Ausgang O1 und O2 ein Signalweg, der für jedes vom Eingang kommende Teilsignal durch Aktivierung eines Koppelelements KE schaltbar ist oder nicht. Durch Auswahl der Koppelelemente kann der Signalweg mit Umsetzung der Wellenlänge (λ1/λ2, λ2/λ1) oder ohne Umsetzung der Wellenlänge (λ1/λ1, λ2/λ2) geschaltet werden. Damit kann jedes an einem der Eingänge ankommende Teilsignal mit oder ohne Wellenlängenumsetzung zu jedem der Ausgänge hin vermittelt werden, wobei normalerweise darauf zu achten ist, daß zu jedem Ausgang pro Betriebswellenlänge nicht mehr als ein Teilsignal vermittelt werden darf, daß also pro Spaltenleitung gleichzeitig nicht mehr als ein Koppelelement aktiviert sein darf.

Der Fachmann erkennt ohne weiteres verschiedene Abwandlungsmöglichkeiten des anhand der Fig. 1 beschriebenen Schaltelements. Nur beispielhaft sind folgende Abwandlungen genannt:

Jeder weitere Eingang erfordert einen weiteren Demultiplexer, pro Betriebswellenlänge eine weitere Zeilenleitung und die zugehörigen weiteren Koppelelemente.

Jeder weitere Ausgang erfordert pro Betriebswellenlänge eine weitere Spaltenleitung, die zugehörigen weiteren Koppelelemente und einen weiteren Multiplexer.

Jede weitere Betriebswellenlänge erfordert pro Demultiplexer einen weiteren Ausgang und eine weitere Zeilenleitung, eine weitere Konstantlichtquelle und von dieser zu jedem Multiplexer eine weitere Spaltenleitung, die zugehörigen weiteren Koppelelemente und pro Multiplexer einen weiteren Eingang.

Weist das optische Schaltelement nur einen Eingang auf, so ist es ein optischer Demultiplexer. Er kann beispielsweise dazu dienen, aus einem in einem Ring umlaufenden Multiplexsignal ein Teilsignal für einen einzelnen Teilnehmer auszukoppeln. In diesem Fall ist es sinnvoll, Einrichtungen zur Wellenlängenumsetzung nur in der Richtung zu diesem einzelnen Teilnehmer hin vorzusehen, um zwar jedes beliebige Teilsignal auskoppeln, dem Teilnehmer aber immer mit derselben Wellenlänge anbieten zu können.

Umgekehrt kann das optische Schaltelement nur einen Ausgang aufweisen, und als optischer Multiplexer arbeiten, um beispielsweise in ein in einem Ring umlaufendes Multiplexsignal ein Teilsignal von einem einzelnen Teilnehmer einzukoppeln. In diesem Fall kann eine Wellenlängenumsetzung nur für das von diesem Teilnehmer kommende Teilsignal genügen. In diesem Fall kann auch die Aufspaltung des durchlaufenden Signals, und damit der Multiplexer am Eingang, entfallen.

Auch der Empfang der Steuersignale, aus denen die Signale zum Ansteuern der Koppelelemente abgeleitet werden, kann wie bei herkömmlichen Vermittlungselementen bekannt, über die Eingänge I1 und I2 erfolgen. Dafür kann eine zusätzliche Wellenlänge verwendet werden; dies entspricht einem separaten Steuerkanal beim Zeitmultiplex. Die Steuersignale können aber auch Bestandteil der einzelnen Teilsignale sein, etwa derart, daß jeder zu vermittelnden Nachricht Steuersignale vorangehen.

Die Durchschaltung der Koppelelemente kann auch dynamisch erfolgen. Damit kann beispielsweise bei Verteildiensten das Vermittlungselement gleichzeitig die Funktion eines Dienstemultiplexers übernehmen, oder es kann gleichzeitig noch eine Zeitmultiplexvermittlung erfolgen.

Insbesondere ist daran gedacht, das Schaltelement für die Übermittlung von ATM-Signalen auszugestalten. Jedes Teilsignal besteht aus einer Folge von ATM-Zellen, die jeweils aus einem Zellkopf und einem nachfolgenden Informationsteil bestehen. Der Zellkopf enthält eine Information, aus der der weitere Weg der Zelle abgeleitet werden kann. Daraus kann, wie bei ATM üblich, eine Steuerinformation zur dynamischen Ansteuerung der Koppelelemente abgeleitet werden. Aufgrund dieser Steuerinformation wird dann für die Dauer einer ATM-Zelle ein bestimmter Signalweg geschaltet und bei Bedarf die Umsetzung der Wellenlänge veranlaßt.

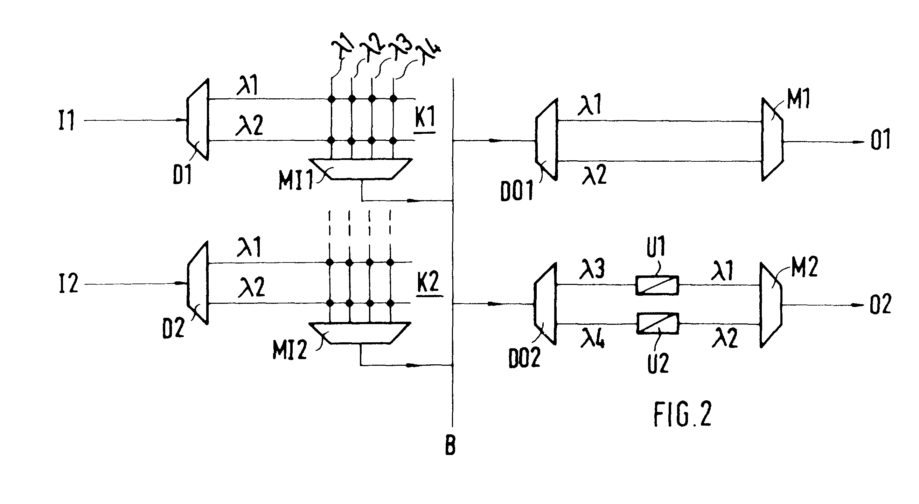

Der Grundgedanke der Erfindung läßt sich auf nahezu alle aus der elektrischen Zeitmultiplextechnik bekannten Strukturen übertragen. Anhand der Fig. 2 wird dies nun am Beispiel einer gegenüber der Fig. 1 gänzlich anderen Struktur gezeigt.

Das Vermittlungselement nach Fig. 2 weist, wie das nach Fig. 1, zwei Eingänge I1 und I2, zwei Ausgänge O1 und O2, zwei Wellenlängen-Demultiplexer D1 und D2 und zwei Wellenlängen-Multiplexer M1 und M2 auf.

Abweichend vom Beispiel nach Fig. 1 wird nun zunächst ein Supermultiplexsignal gebildet. Die vom Eingang I1 kommenden und durch den Demultiplexer D1 voneinander getrennten Teilsignale mit den Betriebswellenlängen λ1 und λ2 werden in einer Koppelmatrix K1 entsprechend ihrer Bestimmung an den Ausgängen mit einer von vier Wellenlängen λ1, ..., λ4 weitergeschaltet. Den Ausgängen der Koppelmatrix K1 ist ein Wellenlängen-Multiplexer MI1 nachgeschaltet.

Dem Eingang I2 und Demultiplexer D2 ist in gleicher Weise eine Koppelmatrix K2 und dieser ein Wellenlängen-Multiplexer MI2 nachgeschaltet.

Die Ausgänge der Multiplexer MI1 und MI2 führen zu einem optischen Bus B.

Dem Ausgang O1 mit vorgeschaltetem Multiplexer M1 ist weiter ein Wellenlängen-Demultiplexer DO1 vorgeschaltet. Dessen Eingang ist mit dem optischen Bus B verbunden. Er weist nur Ausgänge für die Wellenlängen λ1 und λ2 auf, die durch den Multiplexer M1 wieder zusammengefaßt werden.

Dem Ausgang O2 zugeordnet ist ein Wellenlängen-Demultiplexer DO2, der Ausgänge für die Wellenlängen λ3 und λ4 aufweist. In Wellenlängenumsetzern U1 und U2 werden die Wellenlängen λ3 und λ4 auf die Wellenlängen λ1 bzw. λ2 umgesetzt, die durch den Multiplexer M2 wieder zusammengefaßt werden.

Die Einrichtungen zur Ansteuerung der Koppelelemente der Koppelmatrizen K1 und K2 sowie die erforderlichen Konstantlichtquellen sind hier nicht dargestellt.

Zur Realisierung der einzelnen Funktionen stehen dem Fachmann genügend Möglichkeiten zur Verfügung. Beispielhaft wird hier auf den Artikel "Optical Switching Device Technologies" von M. Sakaguchi und K. Kaede in IEEE Communications Magazine, May 1987 - Vol. 25, No. 5 verwiesen.

Als einfache Demultiplexer können Filter, als einfache Multiplexer können Koppler verwendet werden. Als Koppelelemente werden optisch ansteuerbare und elektrisch aktivierbare Elemente bevorzugt. Derzeit ist aber die elektrische Ansteuerbarkeit optischer Schalter noch einfacher zu realisieren; hierzu müßten die Eingangsteilsignale in elektrische Signale umgewandelt werden.

Am Beispiel nach Fig. 2 ist auch leicht zu erkennen, daß eine Koppelmatrix durch abstimmbare Wellenlängenumsetzer oder auch durch zu- und abschaltbare festabgestimmte Wellenlängenumsetzer, kombiniert mit optischen Schaltern, ersetzt werden kann. In diesem Fall dürfen die optischen Schalter nicht als Modulatoren ausgebildet sein, bei denen das Eingangssignal nur zur Steuerung verwendet wird. Die Schalter müssen hier vielmehr so ausgebildet sein, daß das optische Eingangssignal selbst durchgeschaltet wird.

Die gegebenen Ausführungsbeispiele und die angedeuteten Abwandlungsmöglichkeiten lassen die vielfältigen Realisierungsmöglichkeiten eines erfindungsgemäßen Schaltelements erkennen.

## Patentansprüche

1. Optisches Schaltelement
- mit wenigstens zwei zwei Eingängen (I1, I2), je für den Empfang eines Wellenlängenmultiplexsignals, bestehend aus wenigstens zwei Teilsignalen unterschiedlicher Betriebswellenlängen (λ1, λ2),
- mit wenigstens zwei Ausgängen (O1, O2), je für das Übertragen eines Wellenlängenmultiplexsignals, bestehend aus wenigstens zwei Teilsignalen unterschiedlicher Betriebswellenlängen (λ1, λ2),
- mit einer über Wellenlängendemultiplexern (D1, D2) mit den Eingängen (I1, I2) und über Wellenlängenmultiplexern (M1,M2) mit den Ausgängen (O1, O2) verbundenen Koppelmatrix (K), bestehend aus Koppelelementen (KE), die mittels einer Steuereinheit (St) ansteuerbar sind, und
- mit wenigstens zwei,mit der Koppelmatrix (K) verbundenen Konstantlichtquellen (Q1, Q2) zum Erzeugen der wenigstens zwei unterschiedlichen Betriebswellenlängen (λ1, λ2) derart
- daß je zwei Teilsignale mit gleicher Betriebswellenlänge (λ1), die an zwei unterschiedlichen Eingängen (I1, I2) empfangen werden, über die Koppelmatrix geschaltet und umgesetzt werden, so daß sie als Teilsignale mit unterschiedlicher Betriebswellenlänge (λ1, λ2) am gleichen Ausgang (O1) übertragen werden oder derart,
- daß je zwei Teilsignale mit unterschiedlicher Betriebswellenlänge (λ1, λ2), die am gleichen Eingang (I1) empfangen werden, über die Koppelmatrix geschaltet und umgesetzt werden, so daß sie als Teilsignale mit gleicher Betriebswellenlänge (λ 2) an unterschiedlichen Ausgängen (O1, O2) übertragen werden.

2. Optisches Schaltelement nach Anspruch 1, bei dem jeder Eingang (I1, I2) über einen Wellenlängendemultiplexer (D1, D2) derart mit der Koppelmatrix (K) verbunden ist, daß jedes der wenigstens zwei Teilsignale unterschiedlicher Betriebswellenlängen (λ1, λ2) je einer Zeilenleitung der Koppelmatrix (K) zugeführt werden, bei dem jede der wenigstens zwei Konstantlichtquellen (Q1, Q2) je zwei Spaltenleitungen der Koppelmatrix (K) speisen und bei dem jede Konstantlichtquelle (Q1, Q2) über eine Spaltenleitung zu jedem der den Ausgängen (O1, O2) zugeordneten Wellenlängenmultiplexern (M1, M2) geführt ist.

3. Optisches Schaltelement
- mit wenigstens zwei Eingängen (I1, I2), je für den Empfang eines Wellenlängenmultiplexsignals, bestehend aus wenigstens zwei Teilsignalen unterschiedlicher Betriebswellenlängen (λ1, λ2),
- mit wenigstens zwei Ausgängen (O1, O2), je für das Übertragen eines Wellenlängenmultiplexsignals, bestehend aus wenigstens zwei Teilsignalen unterschiedlicher Betriebswellenlängen (λ1, λ2),
- mit einer ersten Koppelmatrix (K1), die über einen ersten Demultiplexer (D1) mit dem ersten Eingang (I1) verbunden ist,
- mit einer zweiten Koppelmatrix (K2), die über einen zweiten Demultiplexer (D2) mit dem zweiten Eingang (I2) verbunden ist,
- mit wenigstens zwei, mit der ersten und der zweiten Koppelmatrix (K1, K2) verbundenen Konstantlichtquellen (Q1, Q2) zum Erzeugen der wenigstens zwei unterschiedlichen Betriebswellenlängen (λ1, λ2),
- mit einem optischen Bus (B), der mit den Ausgängen der ersten und zweiten Koppelmatrix (K1, K2) über einen ersten Wellenlängenmultiplexer (MI1) bzw. über einen zweiten Wellenlängenmultiplexer (MI2) verbunden ist, so daß die über die wenigstens zwei Eingänge (I1, I2) empfangenen und gedemultiplexten Teilsignale (λ1, λ2) als Supermultiplexsignal auf den optischen Bus (B) geführt werden und
- mit den Ausgängen (O1, O2) zugeordneten weiteren Wellenlängenmultplexern (M1, M2), denen weitere Wellenlängendemultiplexern (D01, D02) vorgeschaltet sind, deren Eingänge mit dem optischen Bus (B) verbunden sind, um das auf dem optischen Bus (B) geführte Supermultiplexsignal den Ausgängen (O1, O2) zuzuordnen.

4. Optisches Schaltelement nach Anspruch 1, bei dem die Steuereinheit (StE) über Steuerleitungen (Stl) mit den Koppelelementen (K) und mit einer weiteren Steuerleitung (St) zum Empfang von Steuersignalen verbunden ist, und geeignet ist aufgrund von in den Teilsignalen enthaltener Steuerinformation die Durchschaltung der Koppelelemente (K) dynamisch zu steuern.

5. Optisches Schaltelement nach Anspruch 4, bei dem die Steuereinheit (StE) geeignet ist für ATM-Signale die Koppelelemente (K) derart anzuteuern, daß für die Dauer einer ATM-Zelle ein Signalweg geschaltet wird.

## Claims

1. An optical switch having
- at least two inputs (I1, I2), each for receiving a wavelength-division multiplex signal consisting of at least two signal components of different operating wavelengths (λ1, λ2),
- at least two outputs (O1, O2), each for transmitting a wavelength-division multiplex signal consisting of at least two signal components of different operating wavelengths (λ1, λ2),
- a switching matrix (K) connected to the inputs (I1, I2) via wavelength-division demultiplexers (D1, D2) and to the outputs (O1, O2) via wavelength-division multiplexers (M1, M2) and consisting of switching elements (KE) controllable by means of a control unit (StE), and
- at least two constant light sources (Q1, Q2) connected to the switching matrix (K) for generating the at least two different operating wavelengths (λ1, λ2), such
- that every two signal components of the same operating wavelength (λ1) which are received at two different inputs (I1, I2) are switched through the switching matrix and converted, so that they are transmitted at the same output (O1) as signal components of different operating wavelengths (λ1, λ2), or
- that every two signal components of different operating wavelengths (λ1, λ2) which are received at the same input (I1) are switched through the switching matrix and converted, so that they are transmitted at different outputs (O1, O2) as signal components of the same operating wavelength (λ2).

2. An optical switch as claimed in claim 1 wherein each input (I1, I2) is connected via a wavelength-division multiplexer (D1, D2) to the switching matrix (K) in such a manner that each of the at least two signal components of different operating wavelengths (λ1, λ2) is applied to a respective row lead of the switching matrix (K), wherein each of the at least two constant light sources (Q1, Q2) feeds two column leads of the switching matrix (K), and wherein each constant light source (Q1, Q2) is connected by a respective column lead to each of the wavelength-division multiplexers (M1, M2) associated with the outputs (O1, O2).

3. An optical switch having
- at least two inputs (I1, I2), each for receiving a wavelength-division multiplex signal consisting of at least two signal components of different operating wavelengths (λ1, λ2),
- at least two outputs (O1, O2), each for transmitting a wavelength-division multiplex signal consisting of at least two signal components of different operating wavelengths (λ1, λ2),
- a first switching matrix (K1) connected to the first input (I1) via a first demultiplexer (D1),
- a second switching matrix (K2) connected to the second input (I2) via a second demultiplexer (D2),
- at least two constant light sources (Q1, Q2) connected to the first and second switching matrices (K1, K2) for generating the at least two different operating wavelengths (λ1, λ2),
- an optical bus (B) connected to the outputs of the first and second switching matrices (K1, K2) via a first wavelength-division multiplexer (MI1) and a second wavelength-division multiplexer (MI2), respectively, so that the signal components received via the at least two inputs (I1, I2) and then demultiplexed are carried on the optical bus (B) as a supermultiplex signal, and
- further wavelength-division multiplexers (M1, M2) associated with the outputs (O1, O2) and preceded by further wavelength-division demultiplexers (DO1, DO2) whose inputs are connected to the optical bus (B) for assigning the supermultiplex signal carried on the optical bus (B) to the outputs (O1, O2).

4. An optical switch as claimed in claim 1 wherein the control unit (StE) is connected to the switching elements (K) via control lines (Stl) and to a further control line (St) for receiving control signals, and is adapted to dynamically control the switching of the switching elements (K) in response to control information contained in the signal components.

5. An optical switch as claimed in claim 4 wherein for ATM signals, the control unit (StE) is adapted to control the switching elements (K) in such a manner that a signal path is switched for the duration of one ATM cell.

## Revendications

1. Elément de commutation optique
- avec au moins deux entrées (I1, I2), respectivement pour la réception d'un signal multiplexé en longueur d'onde, composé d'au moins deux signaux partiels de longueurs d'onde de service différentes (λ1, λ2),
- avec au moins deux sorties (O1, O2), respectivement pour la transmission d'un signal multiplexé en longueur d'onde, composé d'au moins deux signaux partiels de longueurs d'onde de service différentes (λ1, λ2),
- avec une matrice de couplage (K) connectée aux entrées (I1, I2) par l'intermédiaire de démultiplexeurs en longueur d'onde (D1, D2) et aux sorties (O1, O2) par l'intermédiaire de multiplexeurs en longueur d'onde (M1, M2), composée d'éléments de couplage (KE) pouvant être commandés au moyen d'une unité de commande (St), et
- avec au moins deux sources de lumière constante (Q1, Q2) connectées à la matrice de couplage (K) pour produire au moins deux longueurs d'onde de service différentes (λ1, λ2) de sorte que
- respectivement deux signaux partiels d'une même longueur d'onde de service (λ1), reçus à deux entrées différentes (I1, I2), sont commutés et convertis par l'intermédiaire de la matrice de couplage de sorte qu'ils sont transmis comme des signaux partiels avec des longueurs d'onde de service différentes (λ1, λ2) au niveau de la même sortie (O1), ou de sorte que
- respectivement deux signaux partiels d'une longueur d'onde de service différente (λ1, λ2), reçus à la même entrée (I1), sont commutés et convertis par l'intermédiaire de la matrice de couplage de sorte qu'ils sont transmis comme des signaux partiels avec une longueur d'onde de service identique (λ2) au niveau de sorties différentes (O1, O2).

2. Elément de commutation optique selon la revendication 1, dans lequel chaque entrée (I1, I2) est connectée par l'intermédiaire d'un démultiplexeur en longueur d'onde (D1, D2) à la matrice de couplage (K) de sorte qu'au moins deux signaux partiels de longueurs d'onde de service différentes (λ1, λ2) sont respectivement amenés à une ligne de rangée de la matrice de couplage (K), dans lequel chacune des au moins deux sources de lumière constante (Q1, Q2) alimente respectivement deux lignes de colonne de la matrice de couplage (K), et dans lequel chaque source de lumière constante (Q1, Q2) est amenée sur une ligne de colonne à chacun des multiplexeurs en longueur d'onde (M1, M2) attribués aux sorties (O1, O2).

3. Elément de commutation optique
- avec au moins deux entrées (I1, I2), respectivement pour la réception d'un signal multiplexé en longueur d'onde, composé d'au moins deux signaux partiels de longueurs d'onde de service différentes (λ1,λ2),
- avec au moins deux sorties (O1, O2), respectivement pour la transmission d'un signal multiplexé en longueur d'onde, composé d'au moins deux signaux partiels de longueurs d'onde de service différentes (λ1, λ2),
- avec une première matrice de couplage (K1) connectée à la première entrée (I1) par l'intermédiaire d'un premier démultiplexeur (D1),
- avec une deuxième matrice de couplage (K2) connectée à la deuxième entrée (I2) par l'intermédiaire d'un deuxième démultiplexeur (D2),
- avec au moins deux sources de lumière constante (Q1, Q2) connectées à la première et à la deuxième matrice de couplage (K1, K2) pour produire au moins deux longueurs d'onde de service différentes (λ1, λ2),
- avec un bus optique (B) connecté aux sorties de la première et de la deuxième matrice de couplage (K1, K2) par l'intermédiaire d'un premier multiplexeur en longueur d'onde (MI1) ou par l'intermédiaire d'un deuxième multiplexeur en longueur d'onde (MI2) de sorte que les signaux partiels (λ1, λ2) reçus sur les au moins deux entrées (I1, I2) et démultiplexés sont transportés comme un signal supermultiplex sur le bus optique (B), et
- avec des multiplexeurs en longueur d'onde supplémentaires (M1, M2), attribués aux sorties (O1, O2), en amont desquels des démultiplexeurs en longueur d'onde supplémentaires (DO1, DO2) sont connectés dont les entrées sont connectées au bus optique (B) pour attribuer le signal supermultiplex transporté sur le bus optique (B) aux sorties (O1, O2).

4. Elément de commutation optique selon la revendication 1, dans lequel l'unité de commande (StE) est connectée par l'intermédiaire de lignes de commande (Stl) aux éléments de couplage (K) et à une ligne de commande supplémentaire (St) pour recevoir des signaux de commande, et est capable sur la base des informations de commande contenues dans les signaux partiels de commander de façon dynamique l'interconnexion des éléments de couplage (K).

5. Elément de commutation optique selon la revendication 4, dans lequel l'unité de commande (StE) est capable de commander les éléments de couplage (K) pour des signaux ATM de sorte qu'une voie de signal est commutée pendant la durée d'une cellule ATM.
